# EUROPÄISCHE PATENTSCHRIFT

(11) **EP 0 597 299 B1**
(45) Veröffentlichungstag und Bekanntmachung des Hinweises auf die Patenterteilung: **21.05.1997**
(21) Anmeldenummer: 93117115.1
(22) Anmeldetag: 22.10.1993
(51) Int. Cl.: G01B 5/00

(54) **Koordinatenmessgerät**
coordinate measuring machine
Dispositif de mesure de coordonnées

(30) Priorität: 12.11.1992 DE 4238139
(43) Veröffentlichungstag der Anmeldung: 18.05.1994
(73) Patentinhaber: Carl Zeiss, D-89520 Heidenheim (Brenz) (DE); CARL ZEISS-STIFTUNG HANDELND ALS CARL ZEISS, D-89518 Heidenheim (Brenz) (DE)
(72) Erfinder: Herzog, Klaus, D-73430 Aalen (DE)

(56) Entgegenhaltungen:
- DE-A- 2 248 535
- DE-A- 3 310 345
- DE-A- 3 419 546
- GB-A- 1 498 009

## Beschreibung

Koordinatenmeßgeräte gibt es heute in verschiedenen Bauformen und Automatisierungsstufen. Neben den CNC-gesteuerten Geräten, die automatisch gesteuert komplexe Meßprogramme an den verschiedensten Werkstücken abarbeiten, sind auch sogenannte manuelle, d.h. nicht oder nur zum Teil motorisierte Koordinatenmeßgeräte in Gebrauch. Bei diesen Geräten führt die Bedienperson den Taster mit der Hand an die zu vermessenden Stellen des Werkstücks.

Obwohl die letztgenannten Geräte meist luftgelagert sind und die zu führenden beweglichen Massen durch entsprechende konstruktive Auslegung soweit als möglich minimiert sind, muß doch die Bedienperson zur Beschleunigung und Verzögerung der Meßschlitten der Maschine noch teils erhebliche Kräfte aufbringen, um die Massenträgheit zu überwinden. Wenn diese Kräfte in der Nähe des Tasters eingeleitet werden, haben sie eine Deformation des Maschinenkoordinatensystems und damit oft große Meßfehler zur Folge. Setzt man beispielsweise zum Zwecke der Formprüfung in solche handgeführten Koordinatenmeßgeräte starre Taster ein und fährt damit bei laufender Meßpunktübernahme kontinuierlich an einem Geometrieelement, d.h. einer Fläche oder einer Bohrungsinnenwand entlang, so können auf diese Weise zwar sehr schnell, ohne großen Aufwand und sehr elegant sehr viele Meßpunkte (z.B. tausend Punkte in einer Bohrung von 50 mm Durchmesser in zwei bis drei Sekunden) aufgenommen werden. Es treten jedoch aufgrund der oben geschilderten Reaktionskräfte abhängig vom Geschick des Bedieners und der Steifheit des Tasters Meßfehler zwischen 10 µm und 100 µm auf.

Man hat versucht, diese Fehler dadurch zu beseitigen, daß die Maschine möglichst nicht am Meßarm (Pinole) geführt wird, sondern an dem sie tragenden Querschlitten. Dann muß jedoch die Pinole entweder motorisiert werden, oder mit beiden Händen bedient werden.

Das an sich sehr elegante Verfahren der Erfassung der Werkstückgeometrie durch Abscannen mit einem starren Taster wird auf handgeführten Koordinatenmeßgeräten deshalb heute nur beim Messen von ebenen Kurven mit weniger hohen Genauigkeitsansprüchen eingesetzt.

Die DE 34 19 546 A1 zeigt ein Gerät zur Ermittlung der Schwerpunktlage von Prüfkörpern. Das Gerät umfaßt ein Koordinatenmeßgerät in Portalbauweise, bei dem auf einem Meßtisch die Schwerpunktlage eines Prüfkörpers bestimmt wird. Hierzu sind auf dem Meßtisch mehrere Kraftmeßdosen vorgesehen, die die Gewichtskraft einer Aufnahmeplatte messen, auf der der Prüfkörper befestigt ist. Die Auflagepunkte der Aufnahmeplatte sind höhenverstellbar.

Die DE 33 10 345 A1 zeigt ein Koordinatenmeßgerät, bei dem ein Taster an mehreren über Gelenken miteinander verbundenen Gelenkarmen befestigt ist. Der Taster ist hierdurch vollkommen frei in drei aufeinander senkrecht stehenden Meßrichtungen beweglich.

Das Patent GB 1 498 009 zeigt ein Koordinatenmeßgerät, bei dem ein Taster über drei zueinander parallelliegende Drehachsen in einer horizontalen Ebene frei führbar ist. Zur Zustellung des Tasters in vertikaler Richtung verfügt das Koordinatenmeßgerät über zusätzliche entsprechende Drehachsen.

Die Offenlegungsschrift DE 22 48 535 beschreibt einen Tisch, der zur Aufnahme von zu vermessenden Werkstücken vorgesehen ist. Der Tisch ist in unterschiedliche Richtungen verstellbar.

Es ist die Aufgabe der vorliegenden Erfindung ein Koordinatenmeßgerät zu schaffen, das es gestattet, in der Betriebsart handgeführtes Abscannen eine Meßgenauigkeit von wenigen µm ohne besondere Anforderung an die Bedienperson zu erreichen. Das Gerät sollte außerdem einfach aufgebaut und leicht zu bedienen und für das Messen von unterschiedlich ausgerichteten Geometrieelementen geeignet sein.

Diese Aufgabe wird durch ein Koordinatenmeßgerät mit den in Anspruch 1 aufgeführten Merkmalen gelöst.

Mit dem neuen Koordinatenmeßgerät können sehr schnell hohe Meßpunktzahlen mit guter Genauigkeit erfaßt werden. Die Ausrichtung der Symmetrieachsen der Geometrieelemente zur Tasterachse erfolgt rasch und einfach mit Hilfe des dreh- und kippbaren Werkstücktisches des Gerätes. Dieser weist zweckmäßig mit dem Taster antastbare Zentrierelemente auf, so daß die Lage des Werkstücks nach jeder Neuorientierung ohne weitere bzw. zusätzliche Meßmittel allein mit Hilfe des Tasters des Koordinatenmeßgerätes bestimmt werden kann.

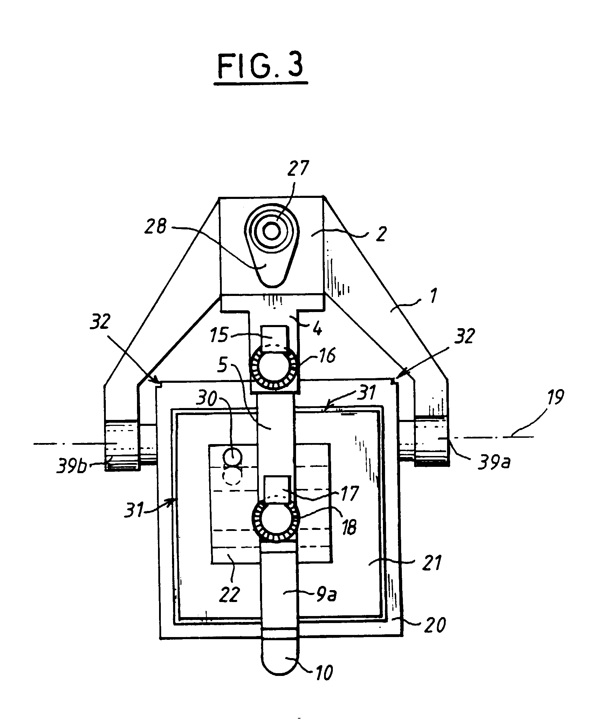

Weitere Vorteile der Erfindung ergeben sich aus der nachfolgenden Beschreibung eines Ausführungsbeispiels anhand der Figuren 1-3 der beigefügten Zeichnungen.
- Figur 1: ist eine Seitenansicht des neuen Koordinatenmeßgerätes;
- Figur 2: zeigt das Koordinatenmeßgerät aus Figur 1 in der Ansicht von vorne;
- Figur 2a: zeigt die Bestimmung der Werkstücklage mit der Tastkugel;
- Figur 3: zeigt das Koordinatenmeßgerät nach Figur 1 in der Aufsicht.

Das in den Figuren dargestellte Koordinatenmeßgerät besitzt einen Grundkörper (1) von in der Aufsicht etwa gabelförmiger Gestalt, auf den eine vertikale Säule (2) aufgesetzt ist. Die Säule (2) ist nach Art eines Höhenmeßgerätes aufgebaut und besitzt eine Spindel (3), die über einen Motor (27) und ein Getriebe (28) einen in der Säule (2) vertikal verschieblichen Träger (4) antreibt. Zur Messung der vertikalen Position des Trägers (4) sind in der Säule (3) ein Inkrementalmaßstab (13) und ein photoelektrischer Lesekopf (14) am Träger (4) vorgesehen.

Der Träger (4) besitzt in der Seitenansicht U-förmige Gestalt. Die beiden Schenkel des "U" enthalten Lager für eine vertikale Achse (6), über die ein erstes Hebelteil (5) in der Waagerechten verschwenkt werden kann. Die Schwenkbewegung wird mit einem auf die Achse gesetzten Teilkreis (16) und einem photoelektrischen Gebersystem (15) erfaßt. Am Ende des Hebelteils (5) ist über eine zweite, zur vertikalen Achse (6) parallele Achse (8) ein zweites Hebelteil (7) ebenfalls drehbar gelagert. Zur Erfassung der Drehbewegung dieser zweiten Drehachse (8) dient ein Teilkreis (18) in Verbindung mit einem Lesekopf (17). Die beiden Drehachsen (6) und (8) sind zueinander beabstandet und etwa vertikal ausgerichtet.

Das zweite Hebelteil (7) ist in Form eines Federparallelogramms (9a, 9b) ausgebildet, an dessen vorderen Ende der Träger (10) für einen starren Taststift (11) angelenkt ist. Mit diesem Federparallelogramm (9a/9b) ist der Taster (11) in der Vertikalen beweglich. Aus Gründen der besseren Übersicht sind die Gewichtsausgleichssysteme, von denen das Federparallelogramm (9a, 9b) in waagerechter Ausrichtung gehalten wird, hier ebensowenig dargestellt wie zusätzliche Mittel, mit denen das Federparallelogramm in z.B. seiner Mittellage geklemmt werden kann. Natürlich kann an dieser Stelle statt eines Federparallelogramms auch eine andere Art von Linearführung eingesetzt werden.

Die beweglichen Teile (5, 7 und 10) bestehen aus z.B. kohlefaserverstärktem Kunststoff (CFK) und besitzen deshalb eine sehr geringe Masse bei hoher Stabilität des Aufbaues bei gleichzeitiger Unempfindlichkeit gegen thermische Effekte.

Die Auslenkung des Tasters (11) in der Vertikalen wird von einem in der Figur vereinfacht dargestellten photoelektrischen Meßsystem bestehend aus Maßstab (23) und Lesekopf (24) erfaßt. Es kann an dieser Stelle jedoch auch ohne weiteres z.B. ein Induktivtaster eingesetzt werden.

Das Ausgangssignal dieses Meßsystems (23/24) dient unter anderem zur Ansteuerung des Motors (27) für den Vertikalantrieb des Trägers (4). Das Meßsystem (23/24) ist zu diesem Zweck mit der Elektronikeinheit (25) des Koordinatenmeßgerätes verbunden, der außerdem die Signale der beiden Winkelmeßsysteme (15/16) und (17/18) sowie das Signal des die Vertikalverschiebung des Trägers (4) messenden inkrementalen Meßsystems (13/14) zugeführt sind.

Aus den Signalen der Meßsysteme (13-18, 23/24) bildet die Elektronikeinheit (25) außerdem Positionskoordinaten für die Meßachsen, die an den Rechner (26) des Geräts übermittelt und dort in an sich bekannter Weise weiterverarbeitet werden. Z.B. zur Berechnung der Position der Tastkugel (12) im Werkstückkoordinatensystem.

Wird nun der Taster (11) manuell aus der Nullage des Meßsystems (23/24) bewegt, so verschiebt der Motor (27) den Träger (4) und damit die Aufhängung des Tasters (11) solange gleichsinnig in der Höhe, bis das Meßsystem (23/24) sich wieder in seiner Nullage befindet. Auf diese Weise treten beim Bewegen des Tasters im Zuge der Scanbewegung kaum Reaktionskräfte in z-Richtung auf. Reaktionskräfte in der horizontalen Ebene x, y sind infolge der leichtgängigen Gelenkanordnung und der äußerst geringen Masse der zu bewegenden Teile (5-11) ebenfalls sehr gering.

Die beiden Schenkel des gabelförmigen Grundgestells (1) des Gerätes enthalten die Lager (39a, 39b) für eine waagerechte Kippachse (19), mittels der ein Träger (20) für den Werkstücktisch des Gerätes gelagert ist. Die Aufspannplatte (21) des Werkstücktisches ist außerdem um eine zur waagerechten Kippachse (19) senkrechte Achse (29) im Träger (20) drehbar gelagert. Mit dem so gebildeten Dreh-Kipptisch läßt sich das darauf gespannte Werkstück (22) in verschiedene Stellungen im Raum ausrichten und zwar so, daß die verschiedenen durch Abscannen zu vermessenden Geometrieelemente mit der Tasterachse fluchten. Um die Ausrichtung des Werkstücks in alle möglichen Raumrichtungen sicherzustellen, kann noch eine dritte Achse, eine Schwenkachse vorgesehen sein, die senkrecht zu den Achsen (19) und (29) ausgerichtet ist. Diese Schwenkachse kann auch in eine Montageplatte integriert werden, auf der das Werkstück außerhalb des Gerätes gespannt wird, und die dann mit dem Werkstück auf dem Dreh-Kipp-Tisch fixiert wird.

Beispielsweise ist für das Abscannen der Bohrung (30) der Werkstücktisch in die gestrichelt gezeichnete Stellung zu kippen, in der die Symmetrieachse der Bohrung parallel zur Taststiftlängsachse ausgerichtet ist. Die Bohrungsinnenwand kann dann in einer waagerechten Ebene unter dauernder Anlage der Tastkugel (12) an der Bohrungsinnenwand abgefahren werden, ohne daß der Tasterschaft an die Bohrungswand anstößt.

Der Dreh-Kipptisch (20/21) des Gerätes ist aus z.B. Keramikformteilen aufgebaut, die eine hohe Stabilität und Tragkraft bei geringer thermischer Empfindlichkeit besitzen.

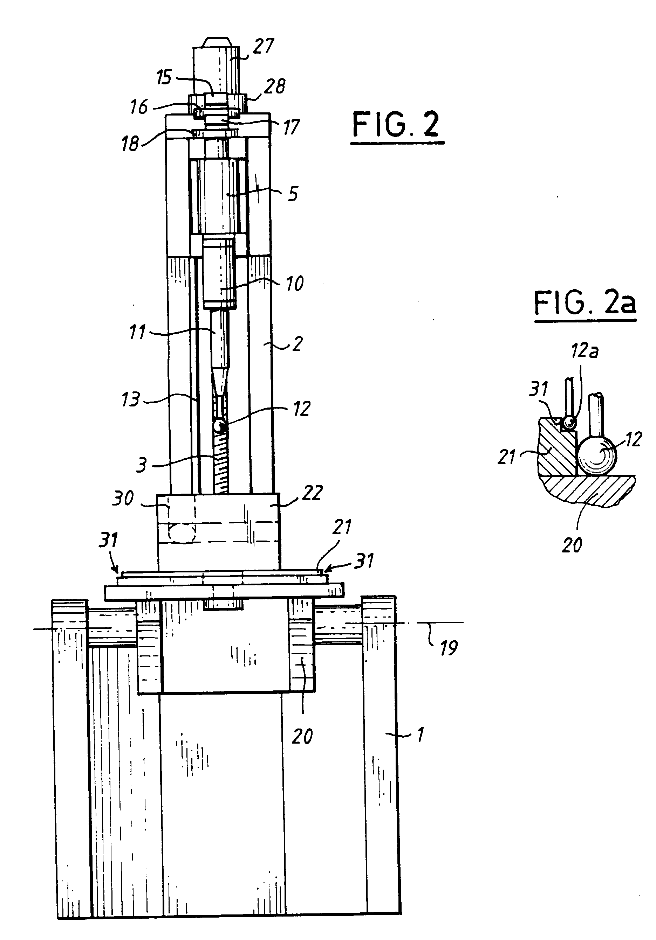

Die drehbare Aufspannplatte (21) des Werkstücktisch bildet mit dem Unterteil (20) des Tisches geradlinige Kanten und trägt außerdem an allen vier Stirnseiten V-förmige Nuten (31). Diese Nuten können wie in Fig. 2a dargestellt zur Bestimmung der Werkstücklage mit der Tastkugel (12) bzw. (12a) mit kleinerem Durchmesser angetastet und abgefahren werden.

Damit die Kipplage des Tisches (20) auch dann bestimmt werden kann, wenn der Tisch um einen relativ großen Winkel von bis zu 90° nach vorn gekippt ist, sind zusätzlich an der Rückseite des Tisches (20) ein paar Nuten (32) angebracht, die in der gekippten Tischstellung dann gut mit dem Taster (11) erreichbar sind.

Sollen auf dem in den Figuren dargestellten Koordinatenmeßgeräten im manuellen Betrieb, mit einem handgeführten starren Taster (11) Formprüfungen am Werkstück (22) vorgenommen werden, so geht man folgendermaßen vor:

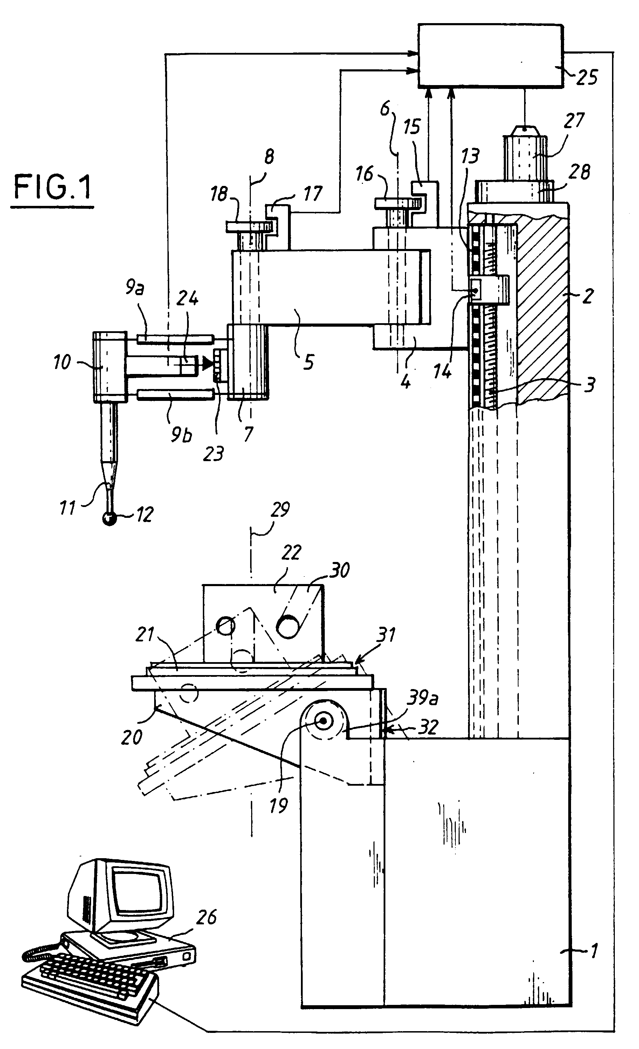

Zuerst wird das Werkstück (22) hinsichtlich seiner zu vermessenden Geometrieelemente, in diesem Falle beispielsweise der zu vermessenden Bohrung (30), mit Hilfe des Dreh-Kipptisches so ausgerichtet, daß die Bohrungsachse in etwa parallel zur Tasterlängsachse ausgerichtet ist. Hierzu wird der Dreh-Kipptisch in die in Figur 1 gestrichelt dargestellte Stellung gebracht und in dieser Stellung werden die Achsen (19) und (29) des Tisches mit Hilfe von nicht näher dargestellten Einrichtungen geklemmt.

Anschließend wird die Bohrung (30) abgescannt und hierbei werden eine Vielzahl von Meßwerten der vorgenannten Meßsysteme vom Rechner (26) für die Formprüfung verarbeitet.

Sollen weitere Geometrieelemente an dem Werkstück in Bezug auf die Bohrung (30) vermessen werden, welche in einer anderen Ebene bzw. auf einer anderen Seite des Werkstücks liegen, so wird anschließend die Raumlage des Dreh-Kipptisches bestimmt, indem die Tastkugel (12) in den Nuten an der Aufspannplatte (21) in mindestens zwei Richtungen bzw. an mindestens zwei Seiten entlanggeführt wird. Der Rechner (26) des Koordinatenmeßgerätes bestimmt hierbei aus den beiden gemessenen Geraden die Raumlage der Platte (21) und damit des Werkstücks (22).

Die Werkstücklage wird dann mit Hilfe des Dreh-Kipp-Tisches so verändert, daß der Taster (11) senkrecht zur nächsten Meßebene bzw. parallel zur nächsten Bohrungsachse steht. Die veränderte Lage der Platte (21) wird dann, wie vorher beschrieben erneut bestimmt. Damit ist der Anschluß der Werkstückkoordinatensysteme in den unterschiedllich gekippten bzw. gedrehten Stellungen gewährleistet, ohne daß für die Reproduzierbarkeit bzw. Genauigkeit der Lagerung der beiden Achsen (19) und (29) des Dreh-Kipptisches Aufwand getrieben werden müßte und ohne daß zur Bestimmung der Achslage zusätzliche Meßsysteme eingesetzt werden müßten.

Danach werden die beschriebenen Meßvorgänge für Geometrieelemente mit anderer Orientierung ihrer Symmetrieachsen wiederholt.

Das vorstehend beschriebene Koordinatenmeßgerät ist für den manuellen Betrieb konzipiert. Es ist jedoch ebenfalls möglich, es ganz oder teilweise zu motorisieren, indem beispielsweise auf die Achsen (6) und (8) Schneckengetriebe gesetzt werden. Weiterhin ist es möglich statt des starren Tasters (11) einen elektronischen Taster mit einem in mindestens zwei Koordinaten senkrecht zur Tasterlängsachse auslenkbaren Taststift zu verwenden, wie er beispielsweise in der DE-OS 18 04 253 beschrieben ist. Die leichte Auslenkbarkeit in der dritten Koordinatenrichtung ist durch das Federparallelogramm (9a/9b) gewährleistet.

Auch können anstelle der Winkelmeßsysteme (15/16) und (17/18) zur Messung der Position des Tasters in der horizontalen Ebene stattdessen andere Meßsysteme eingesetzt werden, beispielsweise solche, die die Position des Tasters von mindestens zwei beabstandeten ortsfesten Stellungen aus anmessen. Derartige Meßsysteme sind beispielsweise in der US-PS 4 961 267 beschrieben.

Es ist weiterhin möglich, das Koordinatenmeßgerät nicht als separates Einzelgerät auszuführen, sondern zur Messung direkt im Fertigungsbereich an Werkzeugmaschinen anzubauen.

## Patentansprüche

1. Koordinatenmeßgerät, dessen Taster (11, 12) über zwei hintereinander geschaltete, zueinander parallele Drehachsen (6, 8) in der horizontalen Ebene frei führbar ist, wobei den Drehachsen Einrichtungen (15-18) zur Erfassung der Drehbewegung zugeordnet sind und wobei die Tasterlängsachse etwa parallel zu den Drehachsen (6,8) ausgerichtet ist und der Taster (11,12) manuell in der Vertikalen auslenkbar ist, dadurch gekennzeichnet, daß
- eine Einrichtung (23/24) zur Erfassung der vertikalen Tasterauslenkung vorgesehen ist
- ein Antrieb (27/28) vorgesehen ist, der einen mit den Drehachsen (6,8) verbundenen Träger (4) in der Höhe verstellen kann
- eine Regeleinrichtung (25) vorgesehen ist, die mit der Einrichtung (23/24) zur Erfassung der Tasterauslenkung und mit dem Antrieb (27/28) verbunden ist und die die manuelle Auslenkung des Tasters (11,12) durch motorisches Verfahren des Trägers (4) mit dem Antrieb rückstellt.

2. Koordinatenmeßgerät nach Anspruch 1, dadurch gekennzeichnet, daß weiterhin ein Werkstücktisch (21) vorgesehen ist, der um mindestens zwei Achsen (19, 29) dreh- bzw. kippbar ist.

3. Koordinatenmeßgerät nach Anspruch 1, wobei Meßsysteme vorgesehen sind, die die Position des Tasters von mindestens zwei ortsfesten, beabstandeten Stellungen aus anmessen.

4. Koordinatenmeßgerät nach Anspruch 1, wobei der Taster ein starrer Taststift (11/12) ist, der über eine Linearführung (9a, b) in der Vertikalen auslenkbar ist.

5. Koordinatenmeßgerät nach Anspruch 1, wobei der Taster ein elektronischer Taster mit auslenkbarem Taststift ist.

6. Koordinatenmeßgerät nach Anspruch 2, wobei der Werkstücktisch (21) mit dem Taster (11/12) antastbare Zentrierelemente (31, 32) aufweist.

7. Koordinatenmeßgerät nach Anspruch 1, wobei die beweglichen Teile (5, 7, 10) zumindest teilweise aus kohlefaserverstärktem Kunststoff (CFK) oder Invar bestehen.

8. Koordinatenmeßgerät nach Anspruch 2, wobei der Werkstücktisch (20/21) aus Keramikformteilen aufgebaut ist.

## Claims

1. Coordinate measuring device with a probe (11, 12) being mounted freely guidable in the horizontal plane by means of two successive rotary shafts (6, 8) the rotary shafts being parallel to each other and comprising means for sensing rotary motion, wherein the longitudinal axis of the probe being aligned approximately parallel to the rotary shafts (6, 8) and the probe (11, 12) being manually deflectable in the vertical direction, characterized by
- means (23/24) for sensing the vertical deflection of the probe
- a drive (27/28) which can move a carrier (4) in the vertical direction, the carrier being connected to the rotary shafts (6, 8)
- a control device (25) being connected to the means (23/24) for sensing the vertical deflection of the probe and being connected to the drive (27/28) wherein the control device resets the manually deflection of the probe (11, 12) by movement of said carrier (4) driven by said drive.

2. Coordinate measuring device according to claim 1, characterized by a workpiece table (21) that is rotatable respectively tiltable about at least two shafts (19, 29).

3. Coordinate measuring device according to claim 1, further comprising measuring systems that measure positions of said probe from at least two stationary, spaced apart positions.

4. Coordinate measuring device according to claim 1, wherein the probe is a rigid probe pin (11/12) being deflectable in the vertical direction by means of linear guiding means (9a, 9b).

5. Coordinate measuring device according to claim 1, wherein the probe is an electronic probe with a deflectable probe pin.

6. Coordinate measuring device according to claim 2, wherein the workpiece table (21) comprises centering elements (31, 32) that can be touched by the probe (11/12).

7. Coordinate measuring device according to claim 1, wherein the deflectable parts (5, 7, 10) consist at least partially of carbon fiber reinforced plastic (CFK) or invar.

8. Coordinate measuring device according to claim 2, wherein the workpiece table (20/21) is made of ceramic parts.

## Revendications

1. Appareil de mesure à coordonnées dont le palpeur (11, 12) peut être guidé librement dans le plan horizontal sur deux axes de rotation (6, 8) parallèle l'un à l'autre et commandés consécutivement, auxquels des dispositifs (15-18) sont affectés pour enregistrer le pivotement et par rapport auxquels l'axe longitudinal du palpeur est aligné à peu près parallèlement et le palpeur (11, 12) déviable manuellement à la verticale,
caractérisé en ce que
- un dispositif (23/24) est prévu pour saisir la déviation verticale du palpeur
- une transmission (27/28) est prévue pour permet de régler en hauteur un support (4) qui est relié aux axes de rotation (6, 8)
- un système de régulation (25) est prévu, tel qu'il est relié au dispositif (23/24) qui sert à enregistrer la déviation du palpeur, ainsi qu'au bloc-moteur (27, 28) et qu'il remet en position d'origine le palpeur (11, 12) déplacé manuellement par l'actionnement motorisé du support (4) à l'aide du bloc-moteur.

2. Appareil de mesure à coordonnées selon la revendication 1, caractérisé en ce qu'une table de pièce d'usinage (21) est encore prévue et qu'elle est pivotante et inclinable autour deux axes (19, 29) au moins.

3. Appareil de mesure à coordonnées selon la revendication 1, tel que des systèmes de mesure sont prévus pour déterminer la position du palpeur à partir de deux emplacements au moins situés en des points fixes et écartés d'une certaine distance.

4. Appareil de mesure à coordonnées selon la revendication 1, tel que le palpeur utilisé est un palpeur rigide (11/12) qui peut être dévié à la verticale sur une glissière linéaire (9a, b).

5. Appareil de mesure à coordonnées selon la revendication 1, tel que le palpeur utilisé est un palpeur électronique muni d'une tige déviable.

6. Appareil de mesure à coordonnées selon la revendication 2, tel que la table de la pièce d'usinage (21) équipée du palpeur (11/12) présente des éléments de centrage (31, 32) palpables.

7. Appareil de mesure à coordonnées selon la revendication 1, tel que les pièces mobiles (5, 7, 10) sont fabriquées au moins partiellement à base d'lnvar ou d'une matière plastique (CFK) renforcée par des fibres de carbone.

8. Appareil de mesure à coordonnées selon la revendication 2, tel que la table de la pièce d'usinage (20/21) est constituée de pièces moulées en céramique.
